# EUROPÄISCHE PATENTANMELDUNG

(11) **EP 2 482 154 A1**
(43) Veröffentlichungstag der Anmeldung: **01.08.2012**
(21) Anmeldenummer: 11152580.4
(22) Anmeldetag: 28.01.2011
(51) Int. Cl.: G05B 19/05

(54) **Verfahren und Bediengerät zum Bedienen einer sicherheitsgerichteten industriellen Automatisierungskomponente**

(71) Anmelder: SIEMENS AKTIENGESELLSCHAFT, 80333 München (DE)
(72) Erfinder: Witte, Karl-Hermann, 90482, Nürnberg (DE)

(57) **Zusammenfassung**

Die Erfindung betrifft ein Verfahren zum Bedienen einer sicherheitsgerichteten Automatisierungskomponente (FCPU) durch ein Bediengerät (BG), wobei eine Mehrzahl der für einen Bedienschritt durchzuführenden elementaren Bedienungen zu einem Bedienobjekt zusammengefasst werden. Die für die Bestätigung erforderlichen Informationen, die beispielsweise auf einer Benutzeroberfläche dargestellt werden, werden ihrerseits in einem Bestätigungsobjekt zusammengefasst, so dass durch die Bestätigung, die Freigabe oder Ausführung eines einzigen Bestätigungsobjektes eine Vielzahl von initiierten Bedienschritten des Bedienobjektes ausgeführt werden können. Dadurch lässt sich die Bedienung einer sicherheitsgerichteten Automatisierungskomponente (FCPU) durch Mittel der Objektorientierung vereinfachen.

## Beschreibung

Die Erfindung betrifft ein Verfahren zum Bedienen einer sicherheitsgerichteten Automatisierungskomponente gemäß dem Oberbegriff des Patentanspruchs 1, und ein Bediengerät für eine sicherheitsgerichtete Automatisierungskomponente gemäß dem Oberbegriff des Patentanspruchs 7.

Bei industriellen Automatisierungskomponenten, die häufig auch als "CPU", "Controller" o.ä. bezeichnet werden, wird zwischen herkömmlichen und sog. fehlersicheren Automatisierungskomponenten unterschieden. Letztgenannte werden kurz auch als "F-CPU's" bezeichnet. Fehlersichere Automatisierungskomponenten kommen überall dort zum Einsatz, wo bei einem Ausfall oder bei einer Fehlfunktion die Gesundheit oder das Leben von Menschen (oder Tieren) beeinträchtigt sein können oder ein hoher Umwelt- oder materieller Schaden droht. Solche fehlersicheren Systeme und Steuerungen basieren regelmäßig auf einer Hardware-Architektur, bei der die wichtigsten Komponenten redundant (doppelt) ausgeführt sind. Weiterhin muss bei solchen Komponenten auch hinsichtlich der Software sichergestellt sein, dass diese den gestellten Sicherheitsanforderungen entspricht.

In den fehlersicheren industriellen Automatisierungskomponenten werden regelmäßig eine Vielzahl von Parametern mit zugeordneten Werten ("Daten") vorgehalten, die durch andere Automatisierungskomponenten, insbesondere Bediengeräte, im laufenden Betrieb geändert werden müssen. Diese Bediengeräte, die häufig selbst keine fehlersicheren Komponenten sind, kommunizieren dazu mit den fehlersicheren Automatisierungskomponenten. Dabei können sowohl in den "nicht-fehlersicheren" Bediengerät als auch auf der Kommunikationsstrecke zwischen dem Bediengerät und der fehlersicheren Automatisierungskomponente Fehler auftreten, die die zu übertragenden Daten, also die Informationen, die zu einer Änderung der Werte der Parameter in der industriellen Automatisierungskomponente führen, derart beeinflussen, dass sich fehlerhafte Werte für die Parameter der fehlersicheren Automatisierungskomponente ergeben.

Ein besonderer Aufwand bei der Bedienung von fehlersicheren Automatisierungskomponenten, also insbesondere der Eingabe und Änderung von Werten, Parametern und Anweisungen, besteht darin, dass eine nach den gleichen Sicherheitsmaßstäben aufgebaute Bedienstation ("F-Bediengerät") vorgesehen werden muss und überdies eine ebensolche sichere Datenübertragung zwischen einer solchen Bedienstation und der fehlersicheren Automatisierungskomponente vorgesehen werden muss.

Aus der Druckschrift EP 22 467 56 A1 ist bereits ein Verfahren und ein Bediengerät bekannt, womit elementare Bedienschritte derart abgesichert von einem Bediengerät zu einer sicherheitsgerichteten Automatisierungskomponente übertragen werden können, dass Fehler sicher erkannt werden und somit Fehlbedienungen, die aufgrund einer gestörten Datenübertragung o.ä. auftreten können, sicher erkannt werden können. Bei diesem Verfahren ist jedoch von Nachteil, dass komplexe Bedienungen eine Vielzahl von Anweisungen und Interaktionen eines Anwenders verlangen, wodurch dem Anwender dezidierte Prozesskenntnisse und eine Vielzahl von Einzelentscheidungen abverlangt werden.

Es ist daher eine Aufgabe der vorliegenden Erfindung, ein Verfahren und ein Bediengerät vorzuschlagen, mit dem auch komplexe Bedienvorgänge durch einen Anwender auf einfache und effiziente Art und Weise bedient werden können, wobei eine vollständige und richtige Ausführung eines komplexen Bedienvorgangs verifiziert werden kann.

Es ist ein Kern der vorliegenden Erfindung, dass komplexe Bedienvorgänge als Bedienobjekte verarbeitet werden, wobei eine Vielzahl an Bedienschritten in einem gemeinsamen Bedienobjekt zusammengefasst bzw. gekapselt sind. Dabei können die Bedienobjekte sowohl elementare Bedienschritte in Form von einzelnen Anweisungen umfassen, als auch Parameter, die einzelnen Bedienschritten zugeordnet sind. Durch das Ausführen eines einzigen Bedienobjektes kann somit ein Anwender die Ausführung einer Vielzahl von Bedienschritten initiieren, wobei die bei sicherheitsgerichteten Automatisierungssystemen erforderliche Rückmeldung und Bestätigung (Quittierung) durch einen Anwender ebenfalls derart erfolgen kann, dass mit einem einzigen Bestätigungsobjekt eine Vielzahl von Bedienschritten, nämlich das Bedienobjekt, quittiert wird.

Die Lösung der Aufgabe sieht insbesondere ein Verfahren gemäß dem Patentanspruch 1 vor. Dabei wird ein Verfahren zum Bedienen einer sicherheitsgerichteten Automatisierungskomponente durch zumindest ein Bediengerät in einer industriellen Automatisierungsanordnung vorgeschlagen, wobei in einer Projektierungsphase eine Mehrzahl der für einen Bedienschritt durchzuführenden elementaren Bedienungen zu einem Bedienobjekt zusammengefasst wird. Ebenfalls in der Projektierungsphase wird ein Bestätigungsobjekt erstellt, welches mit als Reaktion auf die empfangenen Bedienschritte von der Automatisierungskomponente erwarteten Statuswerten verknüpft wird. Ebenso wird in der Projektierungsphase eine Funktionsbeschreibung für die Bedienung erstellt, womit die Berechnung einer Quittierungsmeldung aus einem anzuzeigenden Bestätigungsobjekt definiert ist. In einer Betriebsphase der Automatisierungsanordnung wird in einem ersten Schritt das Bedienobjekt auf dem zumindest einen Bediengerät ausgeführt, wobei die in den Bedienobjekten zusammengefassten elementaren Bedienungen von dem Bediengerät zu der Automatisierungskomponente übertragen werden. In einem zweiten Schritt werden durch die Automatisierungskomponente als Reaktion auf die empfangenen elementaren Bedienungen Statuswerte ermittelt und zu den zumindest einem Bediengerät zurückgemeldet, wonach in einem dritten Schritt in diesem Bediengerät anhand der Statuswerte das Bestätigungsobjekt aufgefunden und/oder zur Ausführung freigegeben wird, wobei nach einer Ausführung des Bestätigungsobjektes in einem vierten Schritt eine Quittierungsmeldung von dem Bediengerät zu der Automatisierungskomponente versendet und dadurch die Anwendung der in dem ersten Schritt übermittelten elementaren Bedienungen initiiert wird. Durch die Kapselung einer Mehrzahl von Bedienschritten zu einem Bedienobjekt und durch die Kapselung der Quittierung einer Mehrzahl der elementaren Bedienungen zu einem Bestätigungsobjekt, wobei beide Objekte jeweils durch einen einzigen Bedienvorgang freigegeben werden können, wird zum Einen ein Anwender entlastet, und zum Anderen kann die Anzahl der zwischen einem Bediengerät und einer Automatisierungskomponente notwendigen Kommunikationsschritte reduziert werden. Zudem kann sichergestellt werden, dass ein Vorgang immer vollständig und nicht nur teilweise ausgeführt wird.

Die Lösung der Aufgabe sieht außerdem ein Bediengerät gemäß dem Patentanspruch 7 vor, wobei ein Bediengerät zur Bedienung einer sicherheitsgerichteten Automatisierungskomponente in einer industriellen Automatisierungsanordnung vorgesehen ist, und wobei das Bediengerät zur Durchführung des vorstehend genannten Verfahrens ausgebildet ist. Dadurch, dass das Bediengerät derart ausgestaltet ist, dass eine Vielzahl von elementaren Bedienungen mittels eines einzigen Bedienvorgangs durch einen Anwender initiiert werden kann, und weiterhin ein nachfolgender Bestätigungsschritt ebenso eine Vielzahl von einzelnen Bestätigungen der elementaren Bedienungen zu einem einzigen Bestätigungsschritt zusammenfassen kann, wird ein Anwender entlastet. Außerdem kann derart sichergestellt werden, dass immer eine Gesamtheit von zusammenhängenden elementaren Bedienungen durchgeführt wird, so dass vermieden werden kann, dass irrtümlich zwar einige einzelne elementare Bedienungen durchgeführt werden, andere notwendige elementare Bedienungen jedoch entfallen.

Vorteilhafte Ausgestaltungen des erfindungsgemäßen Verfahrens sind in den abhängigen Patentansprüchen angegeben. Die dabei aufgezählten Merkmale und Vorteile gelten sinngemäß auch für das erfindungsgemäße Bediengerät.

Vorteilhaft wird in dem dritten Schritt die Ausführung des Bestätigungsobjekts in einem Dialog mit einem Anwender freigegeben. Dabei muss das Bestätigungsobjekt nicht zwingend auf dem gleichen Bediengerät ausgeführt werden, von dem die ursprüngliche Bedienung ausging, also von welchem das Bedienobjekt zu der sicherheitsgerichteten Automatisierungskomponente übertragen wurde. In einer alternativen Ausführungsform kann jedoch auch das Bediengerät als sicherheitsgerichtete Komponente ausgeführt sein, so dass das Bestätigungsobjekt auch automatisch ohne Interaktion mit einem Anwender ausgeführt werden kann.

Wenn in der Projektierungsphase als erwartete Statuswerte oder aus diesen Statuswerten ein erster Hash-Wert erzeugt wird und durch die Automatisierungskomponente oder durch das Bediengerät über die tatsächlichen Statuswerte ein zweiter Hash-Wert erzeugt wird, so kann durch einen Vergleich des ersten und des zweiten Hash-Wertes das zugeordnete Bedienobjekt aufgefunden bzw. zur Bedienung freigegeben werden, wogegen bei Abweichungen zwischen den beiden Hash-Werten davon ausgegangen werden kann, dass die mit dem Bedienobjekt initiierten elementaren Bedienungen nicht richtig oder nicht vollständig zu der Automatisierungskomponente übermittelt worden sind, wonach folgerichtig einem Anwender die Ausführung eines Bestätigungsobjektes nicht angeboten bzw. das Bestätigungsobjekt nicht freigegeben werden darf.

In einer weiteren vorteilhaften Ausgestaltung der Erfindung kann auch einen Anzahl von Bedienobjekten nach Art eines Stapelbetriebs (Batch) nacheinander abgearbeitet werden, wobei nach der Ausführung eines ersten Bedienschritts eine Rückmeldung über Zustände der Automatisierungskomponente oder eines gesteuerten Prozesses zu dem Bediengerät übertragen wird, wobei die Rückmeldung mit einem in dem Bediengerät gespeicherten Sollwert verglichen wird, und wobei der nächste Bedienschritt aufgefunden und/oder freigegeben wird, sofern der Vergleich zu einem positiven Ergebnis führt. Auch bei dieser Ausgestaltung können die Rückmeldung und die Sollwerte jeweils als Hash-Werte verarbeitet und verglichen werden. Der Vorteil bei einer solchen Vorgehensweise liegt darin, dass zwischenzeitliche manuelle Bestätigungsvorgänge durch einen Anwender eingespart werden können, wobei ein nachfolgender Bedienschritt erst dann zur Anwendung kommen kann, wenn ein vorangegangener Bedienschritt korrekt abgeschlossen wurde, also durch einen passenden Status oder passende Statuswerte zurückgemeldet wurde.

Oft ist es erforderlich, elementare Bedienungen mit einem Parameter zu versehen, der einem jeweiligen elementaren Bedienschritt zugeordnet ist. Um zu vermeiden, dass für jede mögliche Einstellung eines Parameters ein separates Bedienobjekt und demzufolge auch ein separates Bestätigungsobjekt definiert und verarbeitet werden muss, wird mit dem ersten Schritt ein auf zumindest einem der Bedienschritte bezogener Parameter separat zu der Automatisierungskomponente übertragen, beispielsweise in einem dem Bedienobjekt angegliederten oder in diesem enthaltenen Parameter-Objekt. In dem zweiten Schritt wird dann durch die Automatisierungskomponente als Reaktion auf den oder die empfangenen Parameter ein Quittierungswert zu dem zumindest einen Bediengerät rückgemeldet, wonach in dem dritten Schritt in dem Bediengerät anhand des Quittierungswertes das Bestätigungsobjekt mit einer Angabe über den anzuwendenden oder den zu ändernden Parameter erweitert wird, wobei nach der Ausführung des Bestätigungsobjektes in dem vierten Schritt durch die Automatisierungskomponente die Anwendung des mit dem Parameter parametrisierten Bedienschrittes initiiert wird.

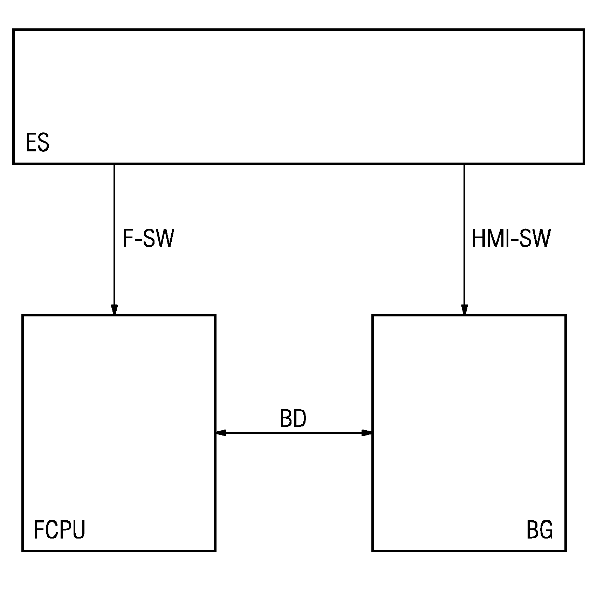

Ein Ausführungsbeispiel des erfindungsgemäßen Verfahrens wird nachfolgend anhand der Zeichnung erläutert. Es dient gleichzeitig der Erläuterung eines erfindungsgemäßen Bediengerätes.

Dabei zeigt die einzige Figur in einer schematischen Darstellung eine Anordnung aus einer sicherheitsgerichteten Automatisierungskomponente, einem zugeordneten Bediengerät und einem Projektierungs- und Programmierungs-Gerät, auch als Engineeringsystem bezeichnet.

Im Folgenden wird ein Beispiel eines erfindungsgemäßen Verfahrens und gleichzeitig ein Beispiel eines erfindungsgemäßen Bediengerät das anhand der Zeichnung erläutert, wobei in der einzigen Figur schematisch ein Engineeringsystem ES, eine sicherheitsgerichtete industrielle Automatisierungskomponente FCPU ("Failsafe-CPU") und ein Bediengerät BG gezeigt ist. Das Engineeringsystem ES dient dabei der Projektierung und Programmierung der Automatisierungskomponente FCPU und des Bediengerätes BG, wobei ein Betriebsprogramm F-SW ("Failsafe-Software") an die Automatisierungskomponente FCPU und ein Bedien- und Beobachtungsprogramm HMI-SW ("Human-Machine-Interface-Software") zu dem Bediengerät BG übertragen wird. Alle beschriebenen Komponenten ES, FCPU, BG sind in einem (nicht dargestellten) Datennetz miteinander verknüpft, wobei die Automatisierungskomponente FCPU und das Bediengerät BG zum Austausch von Bediendaten BD eingerichtet sind. Unter den Begriff "Bediendaten BD" fallen alle Anweisungen, Rückgabewerte, Bestätigungsmeldungen etc., die im Folgenden beschrieben sind.

Es sei angenommen, dass die in der Figur dargestellte sicherheitsgerichtete Automatisierungskomponente FCPU durch das Engineeringsystem ES mit einer Ablaufsteuerung für einen zu steuernden Prozess versehen wurde, wobei im Laufe eines Prozesses eine Vielzahl von Bedienschritten über das Bediengerät BG eingegeben und verarbeitet werden sollen, wobei regelmäßig Bediendaten BD zwischen dem Bediengerät BG und der Automatisierungskomponente FCPU auszutauschen sind. Zu diesem Zweck ist durch das Engineeringsystem ES nicht nur die FCPU-Software F-SW als Ablaufsteuerung an die Automatisierungskomponente FCPU übermittelt worden, sondern auch das Bedien- und Beobachtungsprogramm HMI-SW ("Human-Machine-Interface-Software") für das Bediengerät BG. Aufgrund der Vielzahl einzelner, elementarer Bedienschritte, die für jeden Prozessschritt einzugeben sind, soll die Bedienung in einer objektorientierten Sicht initiiert werden. Ebenso soll die Bestätigung (confirm) der Bedienung entsprechend der objektorientierten Sicht erfolgen. Aus diesem Grund wird im Engineering, auch Projektierung genannt, nicht nur die jeweilige Software F-SW, HMI-SW erzeugt, sondern es werden auch aus einem dem Engineering zu Grunde liegenden Objektmodell zumindest drei Datensätze abgeleitet.

Dabei betrifft ein erster Datensatz die Abbildung einer objektorientierten Bedienung auf elementare Bedienungen. Dabei wird das Bedienobjekt definiert. Ein zweiter Datensatz betrifft als Bestätigungsobjekt die Abbildung der sogenannten "Readback-Werte" zu den mittels des ersten Datensatzes durchgeführten elementaren Bedienungen auf eine Anzeige der objektorientierten Bedienung; das bedeutet, dass die erwarteten Statuswerte, die aus dem Empfang eines Bedienobjektes seitens der Automatisierungskomponente FCPU erzeugt werden, auf ein Bestätigungsobjekt abgebildet werden, welches seitens des Bediengerätes BG mittels eines Benutzerdialoges oder mittels einer automatischen Verarbeitung erkannt, ausgeführt und somit zu einer "Quittierung" der mittels des ersten Datensatzes initiierten Bedienung eingerichtet ist. Der dritte Datensatz betrifft eine Funktionsbeschreibung für die Berechnung der Prüfwerte aus der Anzeigeinformation; dieser dritte Datensatz entspricht inhaltlich meist dem ersten Datensatz, wobei jedoch aus Sicherheitsgründen eine andere Codierung gewählt wird. Dabei entspricht der dritte Datensatz denjenigen Bedien-Daten BD, die für die Quittierung, ausgelöst durch eine Ausführung des Bestätigungsobjektes des zweiten Datensatzes, zu der Automatisierungskomponente FCPU übermittelt werden.

Das erfindungsgemäße Verfahren und somit auch die Ausgestaltung des erfindungsgemäßen Bediengerätes können abhängig vom konkreten Anwendungsfall leicht variieren. Im Folgenden werden einige dieser Anwendungsfälle skizziert, wobei in der Praxis auch Mischformen auftreten können, d.h., dass in einem konkreten Anwendungsfall entweder einzelne Verfahrensschritte modifiziert sein können, oder aber die Verfahrensschritte verschiedener Anwendungsfälle parallel oder nacheinander abgearbeitet werden können.

Grundsätzlich umfasst jeder Datensatz für jeden elementaren Bedienschritt ein eigenes Referenzobjekt. Eine Bedienung ist dabei regelmäßig aus mehreren Bedienschritten aufgebaut. Eine einzige, elementare Bedienung entspricht dabei der Auswahl eines Elementes aus dem ersten Datensatz. Dieses Element kann ggf. parametriert werden. Dies entspricht dann einem Methodenaufruf zu einer Klasse in der objektorientierten Programmierung. Ein ausgewähltes Element aus dem ersten Datensatz enthält dabei die Beschreibung, wie der erste elementare Bedienschritt initiiert wird; diese Initiatoraktion wird dann gestartet. Die Elemente, die sicherheitsgerichtet bedient werden sollen, liefern als zu erwartende Aktion auf die Initiatoraktion eine Statusinformation von der Automatisierungskomponente FCPU an das Bediengerät BG. Mit Hilfe dieser Statusinformation wird der zweite Datensatz und darin die Bedienung gesucht. Dieses Element enthält die Anzeigeinformation zur Bedienung, die beispielsweise auf einer Benutzeroberfläche des Bediengerätes BG angezeigt wird. Dabei ist zu beachten, dass das für die Bestätigungs-Benutzer-Interaktion benutzte Bediengerät BG nicht dasselbe Bediengerät BG sein muss, welches zur Ausführung des Bedienobjektes (erster Datensatz) verwendet wurde. In diesem Bestätigungsschritt wird die gefundene Bedienung dem Anwender angezeigt. Dieser bestätigt dann, dass die von ihm initiierte Bedienung aufgefunden wurde, und gibt damit das Bestätigungsobjekt frei bzw. führt dieses aus. Dabei wird auf Basis der Statuswerte und der aufgefundenen Bedienung die Funktionsbeschreibung zur Bedienung gesucht. Danach werden die Funktionen der Funktionsbeschreibung ausgeführt, sobald Prüfwerte berechnet und gesendet werden. Außerdem wird ggf. eine Folgeaktion bestimmt, welche initiiert wird und danach automatisch oder nach einer Anwenderaktion (Bestätigung) ausgeführt wird. Alle diese Bedienschritte werden selbstverständlich protokolliert.

In einem ersten Anwendungsfall können sogenannte "Massendaten" durch das Bediengerät BG bedient werden. Dabei betrifft der erste Datensatz eine Zuordnungstabelle, die über einen Namen identifiziert wird, wobei dem Namen die elementaren Bedienungen als zugeordnete Elemente zugeordnet sind. Der zweite Datensatz betrifft ebenso eine Zuordnungstabelle, die jedoch über Statuswerte der Automatisierungskomponente FCPU, sogenannte Readback-Werte, identifiziert wird, wobei dieser Identifikation der Name des ersten Datensatzes zugeordnet ist. Der dritte Datensatz entspricht inhaltlich dem ersten Datensatz, jedoch in einer anderen Codierung, um systematische Fehler, beispielsweise auf einer Übertragungsstrecke zwischen dem Bediengerät BG und der Automatisierungskomponente FCPU, ausschließen zu können.

Ein zweiter Anwendungsfall betrifft die Abarbeitung einer Bedienfolge, bei der eine Summe von elementaren Bedienungen nicht in einem Block durchgeführt werden kann, sondern sequentiell, dabei gruppenweise oder einzeln, initiiert werden muss. Dabei besteht ein Schritt der Bedienfolge zunächst aus einer Prüfung des aktuellen Zustands, wobei aktuelle Statuswerte der Automatisierungskomponente FCPU mit erwarteten Werten im erwarteten Zustand verglichen werden. Im ersten Datensatz ist also eine Beschreibung des Bedienautomaten definiert, wobei eine Bedienfunktion mit einer ersten Bedienaktion verknüpft ist. Mit der ersten Bedienaktion wird also ein "Bedienautomat" gestartet; dieser läuft, bis ein Endzustand erreicht wird oder bis ein Fehler auftritt. Der zweite Datensatz dient der Anzeige oder Prüfung eines Status. In einer Zuordnungstabelle sind dabei die Informationen niedergelegt, die von einem Anlagenzustand auf die Identifikation eines definierten Zustandes schließen lassen. Eine solche Zuordnungstabelle ermöglicht die Verwendung der Statuswerte (Readback-Werte) für die Umschaltaktion des Automaten, also für das Initiieren des nächsten Bedienschrittes. Der dritte Datensatz dient jeweils der Berechnung von Prüfwerten, wobei den Prüfwerten mehrere Informationen zu Grunde liegen. Dazu gehören der Anlagenzustand vor der letzten Bedienung, der letzte Bedienschritt, der aktuelle Anlagenzustand, der aktuelle Bedienschritt und die Beschreibung des Bedienautomaten in einer zum ersten Datensatz diversitären Darstellung. Daraus resultierten die Prüfwerte zum Folgebedienschritt. Die Prüfwerte werden genau dann korrekt berechnet, wenn der letzte Bedienschritt korrekt in der Beschreibung des Bedienautomaten gefunden werden kann und der zugehörige Folgebedienschritt initiiert wurde.

In einem dritten Anwendungsfall, der wie bereits erwähnt auch Bestandteil der anderen Anwendungsfälle sein kann, wird eine sogenannte "parametrierbare Bedienung" ermöglicht. Ein Kommando besteht dabei aus einer Identifikation der Bedienung, beispielsweise als "string", und den Parametern zu dieser Bedienung bzw. diesem elementaren Bedienschritt. Dabei umfasst der erste Datensatz eine Zuordnungstabelle der jeweiligen Bedienfunktion zur Interpretation der Parameter, und für jede Bedienfunktion eine Abbildungsvorschrift von dem Parameter auf die bedienbaren Daten untergeordneter Objekte. Der zweite Datensatz umfasst wiederum eine Zuordnungsvorschrift vom Anlagenzustand zur Bedienfunktion, wobei der Anlagenzustand beispielsweise als Statuswerte (Readback-Werte) erfasst wird. Weiter umfasst dieser zweite Datensatz eine Zuordnungsvorschrift vom Anlagenzustand zur Parametrierung der Bedienfunktion. Der dritte Datensatz umfasst in diesem Anwendungsfall eine Zuordnungsvorschrift von der Bedienfunktion zur Beschreibung des Einflusses auf die Prüfwerte. Außerdem umfasst er eine Zuordnungsvorschrift von der Parametrierung der Bedienfunktion zur Beschreibung des Einfluss auf die Prüfwerte. Dies führt dazu, dass trotz der von Fall zu Fall unterschiedlichen Werte für die Parameter immer dieselben Bedien- und Bestätigungsobjekte verwendet werden können.

Durch die vorgenannten Verfahren können sicherheitsgerichtete Bedienungen auch komplexer Art angemessen dargestellt werden. Ein Bediener/Anwender benötigt nur typisches Anwender-Know-How und keine detaillierten Kenntnisse über das Engineering von Details, die nur die Sicherheitsanforderungen betreffen. Dadurch ergibt sich ein erhöhter Bedienkomfort. Außerdem ist durch die vorgenannten Verfahren ein sogenanntes "sicherheitsgerichtetes Batch" möglich, also die Realisierung eines Bedienautomaten. Eine objektorientierte Projektierung eines sicherheitsgerichteten Bediensystems wird so ermöglicht, wobei die Projektierung der sicherheitsgerichteten Bedienfunktionen unabhängig vom sicherheitsgerichteten Programm im Engineering erfolgen kann.

## Patentansprüche

1. Verfahren zum Bedienen einer sicherheitsgerichteten Automatisierungskomponente (FCPU) durch zumindest ein Bediengerät (BG) in einer industriellen Automatisierungsanordnung,
**dadurch gekennzeichnet,**
**dass** in einer Projektierungsphase eine Mehrzahl der für einen Bedienschritt durchzuführenden elementaren Bedienungen zu einem Bedienobjekt zusammengefasst werden, dass in der Projektierungsphase ein Bestätigungsobjekt erstellt wird, welches mit als Reaktion auf die empfangenen Bedienschritte von der Automatisierungskomponente (FCPU) erwarteten Statuswerten verknüpft wird, und dass in einer Betriebsphase der Automatisierungsanordnung
in einem ersten Schritt das Bedienobjekt auf dem zumindest einen Bediengerät (BG) ausgeführt wird, wobei die in den Bedienobjekten zusammengefassten elementaren Bedienungen von dem Bediengerät (BG) zu der Automatisierungskomponente (FCPU) übertragen werden,
in einem zweiten Schritt durch die Automatisierungskomponente (FCPU) als Reaktion auf die empfangenen elementaren Bedienungen Statuswerte ermittelt und zu dem zumindest einen Bediengerät (BG) rückgemeldet werden,
in einem dritten Schritt in diesem Bediengerät (BG) anhand der Statuswerte das Bestätigungsobjekt aufgefunden und/oder freigegeben wird, wobei nach einer Ausführung des Bestätigungsobjektes
in einem vierten Schritt eine Quittierungsmeldung von dem Bediengerät (BG) zu der Automatisierungskomponente versendet und die Anwendung der in dem ersten Schritt übermittelten elementaren Bedienungen initiiert wird.

2. Verfahren nach Patentanspruch 1,
**dadurch gekennzeichnet,**
**dass** in dem dritten Schritt die Ausführung des Bestätigungsobjektes in einem Dialog mit einem Anwender freigegeben wird.

3. Verfahren nach einem der vorhergehenden Patentansprüche,
**dadurch gekennzeichnet, dass**
in dem dritten Schritt ein in der Projektierungsphase als erwartete Statuswerte erzeugter erster Hash-Wert durch die Automatisierungskomponente (FCPU) oder das Bediengerät (BG) mit einem über die empfangenen elementaren Bedienungen als Statuswerte erzeugten zweiten Hash-Wert verglichen wird, wobei nur bei positivem Vergleichsergebnis das Bestätigungsobjekt aufgefunden und/oder freigegeben wird.

4. Verfahren nach einem der vorhergehenden Patentansprüche,
**dadurch gekennzeichnet,**
**dass** eine Mehrzahl von Bedienobjekten nacheinander abgearbeitet werden, wobei
nach der Ausführung eines ersten Bedienschrittes eine Rückmeldung über Zustände der Automatisierungskomponente (FCPU) oder eines gesteuerten Prozesses zu dem Bediengerät (BG) übertragen wird, wobei die Rückmeldung mit einem in dem Bediengerät (BG) gespeicherten Sollwert verglichen wird, und wobei der nächste Bedienschritt aufgefunden und/oder freigegeben wird, sofern der Vergleich zu einem positiven Ergebnis führt.

5. Verfahren nach Patentanspruch 4,
**dadurch gekennzeichnet,**
**dass** für den Vergleich als gespeicherter Sollwert ein dritter Hash-Wert und ein aus der Rückmeldung gebildeter vierter Hash-Wert verwendet werden.

6. Verfahren nach einem der vorhergehenden Patentansprüche,
**dadurch gekennzeichnet,**
**dass** mit dem ersten Schritt ein auf zumindest einen der Bedienschritte bezogener Parameter zu der Automatisierungskomponente (FCPU) übertragen wird,
in dem zweiten Schritt durch die Automatisierungskomponente (FCPU) als Reaktion auf den empfangenen Parameter ein Quittierungswert zu dem zumindest einen Bediengerät (BG) rückgemeldet wird,
in dem dritten Schritt in dem Bediengerät (BG) anhand des Quittierungswerts das Bestätigungsobjekt mit einer Angabe über den anzuwendenden oder zu ändernden Parameter erweitert wird, wobei nach der Ausführung des Bestätigungsobjektes
in dem vierten Schritt durch die Automatisierungskomponente (FCPU) die Anwendung des mit dem Parameter parametrisierten Bedienschrittes initiiert wird.

7. Bediengerät (BG) zur Bedienung einer sicherheitsgerichteten Automatisierungskomponente (FCPU) in einer industriellen Automatisierungsanordnung,
**dadurch gekennzeichnet,**
**dass** das Bediengerät (BG) zur Durchführung eines der vorgenannten Verfahren ausgebildet ist.
